# EUROPÄISCHE PATENTSCHRIFT

(11) **EP 2 394 457 B1**
(45) Veröffentlichungstag und Bekanntmachung des Hinweises auf die Patenterteilung: **21.11.2012**
(21) Anmeldenummer: 10705093.2
(22) Anmeldetag: 12.01.2010
(51) Int. Cl.: H04B 17/00

(54) **VERFAHREN UND TESTVORRICHTUNG ZUR ANALYSE EINES ÜBER EINE FUNKSTRECKE KOMMUNIZIERENDEN GERÄTS**
METHOD AND TEST DEVICE FOR ANALYZING A DEVICE COMMUNICATING VIA A RADIO LINK
PROCÉDÉ ET DISPOSITIF DE TEST PERMETTANT D'ANALYSER UN APPAREIL COMMUNIQUANT PAR VOIE HERTZIENNE

(30) Priorität: 09.02.2009 DE 102009008089; 30.04.2009 DE 102009019685
(43) Veröffentlichungstag der Anmeldung: 14.12.2011
(73) Patentinhaber: Rohde & Schwarz GmbH & Co. KG, 81671 München (DE)
(72) Erfinder: FREIHERR VON GAGERN, Christoph, 85283 Wolnzach (DE); BÄDER, Uwe, 85521 Ottobrunn (DE)
(74) Vertreter: Beder, Jens
(86) Internationale Anmeldenummer: PCT/EP2010/000109
(87) Internationale Veröffentlichungsnummer: WO 2010/089013

(56) Entgegenhaltungen:
- WO-A1-2006/047677
- DE-A1-102007 014 692
- US-A1- 2003 003 883
- US-A1- 2005 176 375
- US-A1- 2008 056 340

## Beschreibung

Die Erfindung betrifft ein Verfahren sowie eine zur Durchführung des Verfahrens vorgesehene Testvorrichtung zur Analyse eines über eine Funkstrecke kommunizierenden Geräts mit einer aus einer Mehrzahl von Antennen bestehenden Antennenanordnung.

Aus der US 2008/0056340 A1 ist eine Anordnung zum Testen von MIMO-Systemen (Multiple Input Multiple Output) bekannt. Ein zu prüfendes Gerät (DUT, Device under Test), wird in einem möglichst reflexionsarmen Prüfraum angeordnet. In dem Prüfraum sind außer dem DUT noch eine Mehrzahl von Antennen angeordnet. Zur Durchführung des Tests sind die einzelnen Antennen über einen Übertragungskanalsimulator ansteuerbar. Zur Durchführung des Tests wird eine bestimmte Kanalkonfiguration durch den Kanalsimulator und die Antennenanordnung erzeugt. Während des Tests werden die Parameter der beispielsweise eine Basisstation emulierenden Antennenanordnung oder die Kanalkonfiguration variiert.

Das beschriebene Verfahren hat den Nachteil, dass lediglich die äußeren Einflüsse einer realen Umgebung durch das Testverfahren abgedeckt werden. Bei modernen Übertragungssystemen, bei denen Mehrantennensysteme zum Einsatz kommen, ist ein besonderes Problem jedoch, dass die Orientierung der Einzelantennen einer solchen Antennenanordnung innerhalb des Funkfelds einen Einfluss auf deren Funktion hat. So können insbesondere z. B. bei Mobilfunkgeräten, deren begrenzte Größe bereits eine erhebliche räumliche Nähe und damit auch Kopplungseffekte der einzelnen Antennen mit sich bringt, die Einflüsse der Positionierung im Funkfeld nur mit langwierigen Messungen erfasst werden.

Die WO 2006/047677 A1 zeigt ein Verfahren zur Bestimmung der abgestrahlten Signalcharakteristik eines zu prüfenden Geräts. Das zu prüfende Gerät wird nacheinander in mehreren Positionen relativ zu einem Funkfeld in einer Testkammer positioniert. Das Verfahren bestimmt eine gemessene Signalcharakteristik aus einem Empfangssignal eines Empfängers des zu testenden Geräts an jeder Einzelnen einer Mehrzahl von Positionen im Rahmen eines vorab festgelegten Testverlaufs. Die gemessene Empfangssignalcharakteristik wird dabei aus einer von einem Tester ausgesendeten Referenzsignalcharakteristik bestimmt. Zusätzlich werden aus dem empfangenen Signal Synchronisierungsdaten ermittelt, die eine Zuordnung der gemessenen Empfangssignalcharakteristik zu einer Positionsinformation des Testobjekts zum Empfangszeitpunkt ermöglichen. Aus diesen Daten wird für jede Position des Testobjekts entsprechend dem festgelegten Testverlauf ein Datensatz gebildet und in einer Testdatei gespeichert. Anschließend wird in einer Offline-Auswertung aus den gespeicherten Testdaten eine Leistungscharakteristik für das Testobjekt erzeugt.

Es ist daher die Aufgabe, ein Verfahren sowie eine Testvorrichtung zu schaffen, bei der ein Gerät mit einer Mehrantennenanordnung besser analysiert werden kann.

Bei dem erfindungsgemäßen Verfahren wird eine Verbindung zwischen einem zu untersuchenden Gerät und einem Testgerät aufgebaut. Das Testgerät, d.h. genauer dessen Funksignalerzeugungseinheit, und das zu analysierende Gerät kommunizieren über eine Funkstrecke miteinander. Zur Kommunikation verwendet das zu analysierende Gerät eine Mehrzahl von Antennen, die gemeinsam eine Antennenanordnung bilden. Das zu testende Gerät wird zunächst in einer ersten Position relativ zu einem von dem Testgerät erzeugtem Funkfeld angeordnet. In dieser Position wird ein erster Wert zumindest einer in einem Rückkanal von dem zu testenden Gerät an den Tester übermittelten Kanalzustandsinformation ermittelt. Nachdem dieser erste Wert ermittelt wurde, wird die Position des zu prüfenden Geräts relativ zu dem Funkfeld verändert. In dieser geänderten Position wird ein zweiter Wert der zumindest einen Kanalzustandsinformation ermittelt. Durch das Erfassen der Werte derselben Kanalzustandsinformation in einer ersten Position und wenigstens in einer zweiten Position können Rückschlüsse auf die Änderung beispielsweise einer Qualität des Mobilfunkgeräts durch eine Änderung der Orientierung der Antennenanordnung in dem Funkfeld getroffen werden.

Hierzu ist eine erfindungsgemäße Testvorrichtung vorgesehen. Die Testvorrichtung weist eine Funksignalerzeugungsvorrichtung zur Erzeugung eines Funkfelds und eine Analysevorrichtung auf. Dieses Funkfeld entspricht beispielsweise dem Funkfeld einer nach einem bestimmten Mobilfunkstandard arbeitenden Basisstation. Die Testvorrichtung hat eine Aufnahmevorrichtung zur Anordnung des zu prüfenden Geräts in dem Funkfeld. Um Werte der zumindest einen Kanalzustandsinformation zu ermitteln, ist eine Analysevorrichtung in der Testvorrichtung vorhanden. Erfindungsgemäß ist die Aufnahmevorrichtung mit einer Positioniervorrichtung verbunden. Durch eine solche Positioniervorrichtung kann die Aufnahmevorrichtung im Raum um wenigstens eine Raumachse gedreht werden, so dass die relative Lage des zu testenden Geräts zu dem von dem Tester erzeugten Funkfeld einstellbar ist. Die Analysevorrichtung ist so eingerichtet, dass in jeder relativen Position ein Wert für die zumindest eine Kanalzustandsinformation ermittelt wird.

Die Funksignalerzeugungseinrichtung ist beispielsweise Teil eines Basisstationsimulators, der in einer bidirektionalen Verbindung gemäß einem Mobilfunkstandard mit dem DUT steht. Bei der Auswertung der Kanalzustandsinformation ist eine Limitierung auf lediglich einen Wert einer Kanalzustandsinformation nicht vorgesehen. Insbesondere ist es vorteilhaft, sämtliche über den Rückkanal zurückgesendeten Kanalzustandsinformationen mittels der Analysevorrichtung auszuwerten, die eine Information über die momentane Qualität der Übertragungskanäle enthalten. Dies können im Falle von LTE (Long Term Evolution) beispielsweise sein: ein CQI (Channel Quality Indicator), RI (Rank Indicator) und PMI (Precoding Matrix Indicator).

Die Unteransprüche betreffen vorteilhafte Weiterbildungen des erfindungsgemäßen Verfahrens sowie der erfindungsgemäßen Testvorrichtung.

Bevorzugt werden mehrere Positionsänderungen nacheinander durchgeführt, wobei durch die Positionierung ein vorab festgelegtes Orientierungsschema abgearbeitet werden kann. Insbesondere wird damit eine hohe Wiederholbarkeit und eine Vergleichbarkeit an verschiedenen Prüflingen durchgeführter Tests möglich. Dabei ist insbesondere auch festgelegt, dass das Funkfeld für das Abarbeiten einer Sequenz von Positionen konstant ist, um so Einflüsse, die nicht von der Orientierung der Antennenanordnung herrühren, auszublenden.

Gemäß einer weiteren vorteilhaften Weiterbildung ist es vorgesehen, für zumindest einen Teil der eingenommenen relativen Positionen des zu prüfenden Geräts eine Variation des Funkfelds durchzuführen. Dabei wird nach Abarbeiten einer Sequenz von relativen Positionen mit einem konstanten Funkfeld dieselbe Sequenz von Positionen oder eine Untermenge hiervon mit anderen Einstellungen des Funkfelds durchlaufen. Innerhalb der Sequenz wird das Funkfeld dabei konstant gehalten.

Die ermittelten Werte für die Kanalzustandsinformationen werden bevorzugt größenabhängig von der zugeordneten Position sowie dem jeweils während der Messung herrschenden Funkfeld gespeichert.

Die erfindungsgemäße Testvorrichtung weist vorzugsweise neben Funksignalerzeugungsvorrichtung, der Analysevorrichtung und der Positioniervorrichtung eine Steuereinrichtung auf. Diese Steuereinrichtung ist mit der Analysevorrichtung und der Positioniervorrichtung verbunden. Der Ablauf während der Durchführung eines Testcases wird dabei durch die Steuereinrichtung zentral gesteuert. Sie koordiniert die Durchführung der eigentlichen Messung und die Ermittlung der Werte für die Kanalzustandsinformation sowie das Einnehmen einer neuen Position, sofern in der zuvor eingestellten Position keine weitere Messung erforderlich ist. Insbesondere ist die Steuereinrichtung so eingerichtet, dass nach dem Ermitteln von Werten in den nacheinander geänderten, neuen Positionen ein vordefiniertes Testszenario mit Variation des Funkfelds durchführbar ist. Hierzu übermittelt die Steuereinrichtung an die Funksignalerzeugungseinrichtung ein Testszenario bzw. eine Abfolge von Einstellungen des Funkfelds, die durch die Funksignalerzeugungseinrichtung sequentiell abgearbeitet werden. Für jede individuelle Einstellung des Funkfelds wird dabei die Sequenz der Positionen neu durchlaufen und es werden wiederum die Werte der Kanalzustandsinformation ermittelt.

Die Testvorrichtung weist einen Speicher auf, in dem die Werte für die einzelnen Parameter in Abhängigkeit von der Position und dem eingestellten Funkfeld abgelegt werden. Der Speicher ist vorzugsweise mit der Steuereinrichtung und der Analyseeinrichtung verbunden. Mittels der Steuereinrichtung wird in den Speicher geschrieben, welches die gerade eingestellte Position ist und vorzugsweise auch welches Funkfeld angelegt ist, und mittels der Analysevorrichtung werden die Werte, die aus den Informationen des Rückkanals ermittelt werden, in dem Speicher der Positionsinformation zugeordnet abgelegt.

Ein Ausführungsbeispiel des erfindungsgemäßen Verfahrens und der hierfür verwendeten Testvorrichtung ist in der Zeichnung dargestellt und wird in der nachfolgenden Beschreibung näher erläutert. Es zeigen:
- Fig. 1: eine schematische Darstellung des Ablaufs des erfindungsgemäßen Verfahrens; und
- Fig. 2: ein Blockschaltbild einer Testvorrichtung zur Durchführung des erfindungsgemäßen Verfahrens.

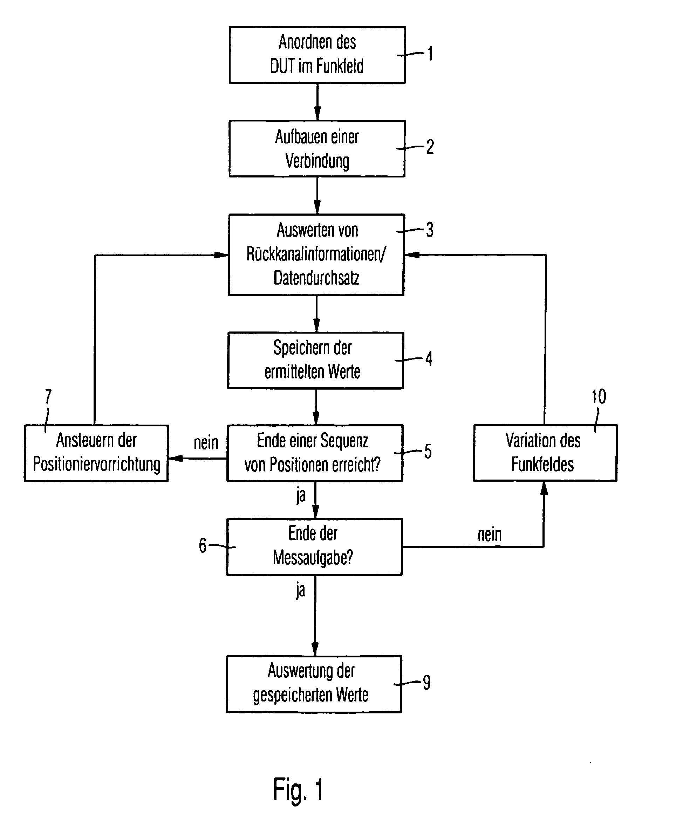

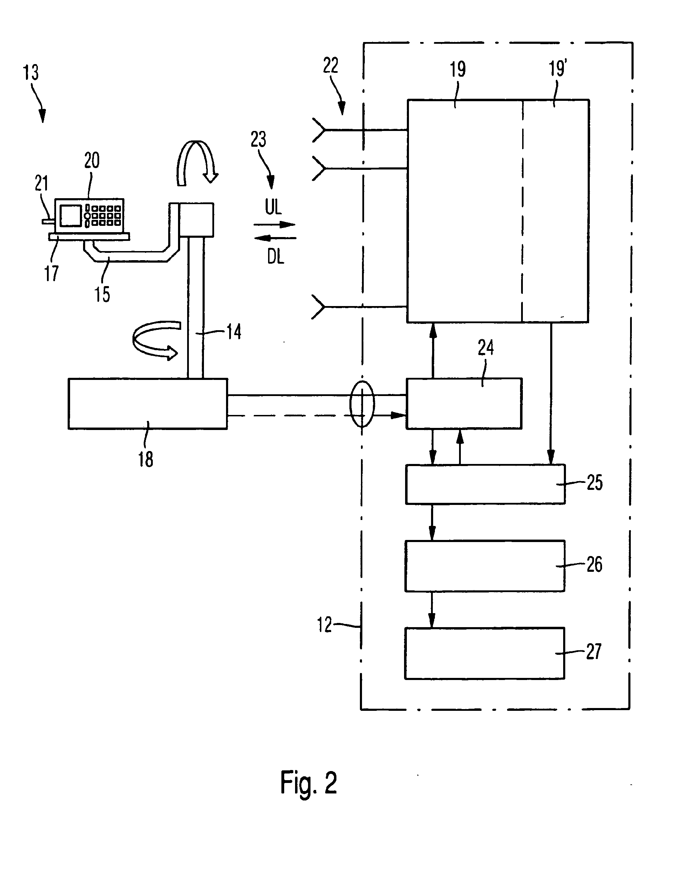

Die Anordnung zur Durchführung des erfindungsgemäßen Verfahrens wird nachfolgend unter Bezugnahme auf die Fig. 1 und Fig. 2 noch detailliert erläutert. Zunächst wird ein DUT (Device under Test), für das eine Analyse durchgeführt werden soll, in einem Funkfeld angeordnet. In der Regel ist ein solches DUT ein Mobilfunkgerät. Dieses Anordnen 1 erfolgt durch Fixieren des DUT in einer Aufnahmevorrichtung. Die Aufnahmevorrichtung ist in einem Prüfraum angeordnet. Der Prüfraum ist insbesondere so ausgestaltet, dass unerwünschte Reflexionen oder Ausbreitungswege möglichst unterdrückt werden. In dem Prüfraum sind ferner die Antennen einer Testvorrichtung angeordnet. Zwischen den Antennen der Testvorrichtung und den Antennen des DUT werden Funksignale in beide Richtungen ausgetauscht.

Nachdem in Schritt 1 das DUT im Funkfeld angeordnet wurde, wird eine Verbindung über die Funkstrecke aufgebaut. Die Testvorrichtung verhält sich dabei wie eine Basisstation, die dem Mobilfunkstandard des Prüflings entsprechend arbeitet. Nachdem in Schritt 2 die Verbindung aufgebaut wurde, wird mindestens eine über einen Rückkanal übermittelte Kanalzustandsinformation analysiert. Eine solche Kanalzustandsinformation kann beispielsweise ein CQI, ein RI oder ein PMI sein. Diese Informationen werden standardgemäß zwischen dem Mobilfunkgerät und einer Basisstation ausgetauscht, die während der Durchführung des Tests von dem die Basisstation emulierenden Tester (Kommunikationstester) ersetzt wird. Damit stehen dem Tester die Kanalzustandsinformationen schnell zur Verfügung und eine kurze Testzeit ist die Folge.

Zudem kann in Schritt 3 auch der Datendurchsatz ermittelt werden. Die ermittelten Werte des Datendurchsatzes werden in Bezug auf die Position, in der das Mobilfunkgerät in dem Prüfraum angeordnet war, in einem Speicher abgelegt (Schritt 4).

In Schritt 5 wird dann abgefragt, ob das Ende der Messung in einer Sequenz von Positionen erreicht ist. Es wird hierzu ermittelt, ob eine vordefinierte Endposition bereits erreicht wurde. Als Endposition wird die letzte Position einer Sequenz von relativen Positionen bezeichnet. Ist die Endposition noch nicht erreicht, wird in Schritt 7 die Positioniervorrichtung, die mit der Aufnahmevorrichtung verbunden ist, so angesteuert, dass die nächste relative Position im Funkfeld eingenommen wird. Beispielsweise bedeutet dies eine Drehung um eine Raumachse um 30°.

Ist die letzte Position einer Sequenz von Positionen erreicht, so wird anschließend abgefragt, ob das Ende einer Messaufgabe ebenfalls bereits erreicht ist (Schritt 6). Eine Messaufgabe kann beispielsweise aus mehreren zu durchlaufenden Sequenzen mit identischen Positionsfolgen bestehen, wobei bei jedem Durchlauf der Sequenzen ein geändertes Funkfeld angelegt wird. Wird also in Schritt 6 festgestellt, dass die Gesamtmessaufgabe noch nicht vollständig abgearbeitet ist, so wird eine Variation des Funkfelds in Schritt 10 durchgeführt. Gemäß einer bevorzugten Ausführungsform endet eine Sequenz von Positionen wieder mit der Startposition. In dem oben bereits beschriebenen Ausführungsbeispiel, bei dem in 30°-Schritten Positionen eingenommen werden, ist also nach einer Abfolge von 12 Schritten wieder die Ausgangsposition erreicht. Es wird dann das Funkfeld variiert. In dieser neuen Konfiguration des Funkfelds wird dann wieder die Sequenz an Positionen durchgeführt, wobei in jeder Position erneut zumindest ein Wert für eine Kanalzustandsinformation aufgenommen und in Abhängigkeit von der Position und dem der Messung zugrundeliegenden Funkfeld gespeichert wird.

Alternativ zu dem allerdings bevorzugten, vorstehenden Ausführungsbeispiel ist es auch denkbar, dass in jeder Position einer Sequenz eine Variation des Funkfelds durchgeführt wird. Nachdem die Variation des Funkfelds abgeschlossen ist und die Kanalzustandsinformationen aufgenommen wurden, kann dann wieder die relative Position geändert werden. Dort ist erneut eine Variation des Funkfelds und damit die Aufnahme von mehreren Werten in derselben Position möglich.

Wird am Ende einer Sequenz von Positionen zudem ermittelt, dass die Messaufgabe beendet wird, so wird in Schritt 9 eine Auswertung der gespeicherten Werte durchgeführt. Im beschriebenen Ausführungsbeispiel betreffen die gespeicherten Werte die Kanalzustandsinformationen CQI, RI oder PMI.

Es ist selbsterklärend, dass die genannten Parameter CQI, RI und PMI lediglich Beispiele darstellen.

Die Schritte 3-5 und 7 werden zyklisch durchlaufen, so lange immer neue Positionen einer Sequenz angesteuert werden.

Insbesondere kann auch der gesamte Raum abgetastet werden, indem das Mobilfunkgerät systematisch um die drei Raumachsen in bestimmten Winkelschritten (z. B. 30°) gedreht und jeweils eine neue Messung durchgeführt werden. Für jede eingenommene Position der Sequenz werden weitere Werte der Kanalzustandsinformationen ermittelt. Die Endposition wäre dann beispielsweise erreicht, wenn eine 360°-Drehung um eine der Achsen abgeschlossen ist. So kann mit einer schrittweisen Drehung um insgesamt 360° in azimutaler Richtung und einer Elevation von insgesamt 180° eine gesamte Kugel abgedeckt werden.

Im einfachsten Fall kann eine Auswertung in einer optischen Darstellung der ermittelten Werte über dem jeweils eingenommenen Positionswinkel sein.

Wie es vorstehend bereits erläutert wurde, kann in bestimmten Positionen oder auch in allen eingenommenen Positionen relativ zu dem Funkfeld eine Variation des Funkfelds durchgeführt werden. Insbesondere ist zusätzlich zur Ermittlung der ortsaufgelösten Werte der Kanalzustandsinformation eine Empfindlichkeitsmessung möglich. Hierbei wird die Leistung des im Downlink von der emulierten Basisstation an das Mobilfunkgerät übermittelten Signale stufenweise reduziert, bis ein Grenzwert für die Blockfehlerrate seitens des DUT erreicht wird. Weiterhin kann auch der Datendurchsatz ermittelt werden.

Zur Durchführung des erfindungsgemäßen Verfahrens dient eine Testvorrichtung, die im Wesentlichen so aufgebaut ist, wie es das Blockschaltbild der Fig. 2 zeigt. Die Testvorrichtung 11 umfasst neben dem Tester 12, der die Signale zur Kommunikation mit dem Mobilfunkgerät 20 empfängt und sendet, eine Positioniervorrichtung 13. Die Positioniervorrichtung 13 weist im dargestellten Ausführungsbeispiel einen ersten drehbaren Tragarm 14 auf. An diesem ersten Tragarm 14 ist ein zweiter drehbarer Tragarm 15 angeordnet. Die Achsen, um die der erste Tragarm 14 und der zweite Tragarm 15 drehbar sind, stehen senkrecht aufeinander. Die in der Fig. 2 dargestellten Pfeile kennzeichnen dabei die möglichen Bewegungsrichtungen. Mit einer solchen, lediglich beispielhaft zu verstehenden Anordnung ist es möglich, das DUT, hier ein Mobilfunkgerät 20, in jeder beliebigen Orientierung relativ zu dem Funkfeld zu positionieren.

Das Mobilfunkgerät 20 ist an dem zweiten Tragarm mit Hilfe der Aufnahmevorrichtung 17 fixiert. Das Mobilfunkgerät 20 weist eine nur schematisch angedeutete Antennenanordnung 21 auf, die aus wenigstens einer ersten und einer zweiten Antenne besteht.

Der Tester 12 weist eine Funksignalerzeugungsvorrichtung 19 auf. Die Funksignalerzeugungsvorrichtung 19 steht mit dem Mobilfunkgerät 20 über eine Funkstrecke 23 in Verbindung. Die Funkstrecke 23 besteht aus einer Downlink-(DL) und aus einer Uplink- (UL) Richtung. An der Funksignalerzeugungsvorrichtung 19 ist ebenfalls eine Mehrzahl von Antennen vorgesehen, die gemeinsam die Antennenanordnung 22 der emulierten Basisstation bilden.

Es ist insbesondere vorgesehen, dass die Antennenanordnung 22 der Funksignalerzeugungsvorrichtung 19 komplexer als die herkömmlicher Basisstationen sind. Denn zur Simulation von unterschiedlichen Ausbreitungswegen realer Funksignale wird mittels einer Mehrzahl von Antennen ein reales Funkfeld nachgebildet.

Zum Bewegen des ersten Tragarms 14 und des zweiten Tragarms 15 relativ zueinander ist ein Antrieb 18 vorgesehen. Der Antrieb 18 und die Funksignalerzeugungsvorrichtung 19 stehen mit einer Steuereinrichtung 24 in Verbindung. Die Steuereinrichtung 24 gibt dem Antrieb 18 die einzustellende Position für das Mobilfunkgerät 20 vor. Wie es durch den gestrichelten Pfeil dargestellt ist, kann das Erreichen der vorgegebenen Endposition durch den Antrieb 18 der Steuereinrichtung 24 zurückgemeldet werden. Das einzustellende Funkfeld wird durch die Steuereinrichtung 24, die den Ablauf einer Messreihe organisiert, der Funksignalerzeugungsvorrichtung 19 mitgeteilt. Die Steuereinrichtung 24 steht ebenso wie die Funksignalerzeugungsvorrichtung 19 mit einem Speicher 25 in Verbindung. Einerseits können in dem Speicher 25 Testszenarien abgespeichert sein. So kann insbesondere die Schrittweite bei der Ansteuerung von neuen Positionen des Mobilfunkgeräts 20 in dem Speicher 25 abgelegt sein. Andererseits wird die jeweils eingestellte Position durch die Steuereinrichtung 24 dem Speicher 25 mitgeteilt. Im Zusammenhang mit dieser mitgeteilten Positionsinformation wird dann zu einer bestimmten Kanalzustandsinformation des Mobilfunkgeräts 20 durch Auswerten des Rückkanals (Uplink) durch die Analysevorrichtung 19' ein Wert ermittelt. Dieser Wert wird von der Analysevorrichtung 19' dem Speicher 25 übermittelt und dort zusammen mit der der Auswertung zugrunde liegenden Position des Mobilfunkgeräts 20 gespeichert. Die Funksignalerzeugungseinheit 19 und die Analysevorrichtung 19' bilden gemeinsam einen Kommunikationstester.

Wie es zuvor bei der Erläuterung des Verfahrens bereits beschrieben wurde, werden nacheinander mehrere Positionen angesteuert. In jeder Position wird zumindest eine Messung bei einer bestimmten Funkfeldkonfiguration durchgeführt. Es entsteht daher zumindest ein Wertepaar, bestehend aus der Positionsinformation und dem Wert der jeweils betrachteten Kanalzustandsinformation. Diese Wertepaare werden durch eine Auswerteeinheit 26 analysiert und beispielsweise über einen Bildschirm 27 ausgegeben. Bei einer Ausgabe über den Bildschirm 27 erfolgt lediglich eine grafische Information über den Verlauf eines bestimmten Werts in Abhängigkeit von der eingenommenen Position des Mobilfunkgeräts 20 und damit der Antennenanordnung 21. Selbstverständlich können auch andere Ausgabeformen, z.B. numerisch, verwendet werden oder die Werte einer weiteren rechnergestützten Analyse zugeführt werden.

Änderungen, die durch die Antennenanordnung 21 bzw. deren Position im Raum relativ zu einem statisch gehaltenen Funkfeld auftreten, können auf die Art und Weise leicht und schnell analysiert werden. Die Durchführung der beiden in der Fig. 1 erläuterten Schleifen kann auch umgekehrt erfolgen. D.h., es wird zunächst zu einer bestimmten Position jeweils eine Messung durchgeführt. Danach wird das Funkfeld einmal oder mehrfach geändert und erneut eine Messung durchgeführt. Nach Abschluss der Variation des Funkfelds wird dann erst eine neue Position eingenommen, für die ebenfalls wieder das Funkfeld variieren kann.

Die Erfindung ist nicht auf das dargestellte Ausführungsbeispiel beschränkt. Insbesondere sind einzelne Merkmale vorteilhaft miteinander kombinierbar.

## Patentansprüche

1. Verfahren zur Analyse eines über eine Funkstrecke (23) kommunizierenden Geräts (20), welches zur Kommunikation eine aus einer Mehrzahl von Antennen bestehende Antennenanordnung (21) verwendet, mit folgenden Verfahrensschritten:
- Anordnen (1) des zu prüfenden Geräts (20) in einer ersten relativen Position relativ zu einem Funkfeld (23),
- Ändern der relativen Position (7) des zu prüfenden Geräts (20) relativ zu dem Funkfeld,
**dadurch gekennzeichnet,**
**dass** in der ersten Position ein erster Wert zumindest einer in einem Rückkanal zurückgesendeten Kanalzustandsinformation und in der geänderten relativen Position ein zweiter Wert der zumindest einen Kanalzustandsinformation ermittelt wird (3).

2. Verfahren nach Anspruch 1,
**dadurch gekennzeichnet,**
**dass** mehrere Positionsänderungen (7) nacheinander durchgeführt werden und in jeder eingenommenen relativen Position eine Ermittlung eines Werts (3) für die zumindest eine Kanalzustandsinformation erfolgt.

3. Verfahren nach Anspruch 2,
**dadurch gekennzeichnet,**
**dass** für zumindest einen Teil der eingenommenen relativen Positionen nach einer Variation des Funkfelds die Ermittlung der Werte der Kanalzustandsinformation wiederholt wird.

4. Verfahren nach einem der Ansprüche 1 bis 3,
**dadurch gekennzeichnet,**
**dass** die in jeder Position ermittelten Werte (3) in Zusammenhang mit der Position gespeichert werden (4).

5. Verfahren nach Anspruch 4,
**dadurch gekennzeichnet,**
**dass** bei Durchführen einer Variation des Funkfelds (10) zu jeder eingenommenen, relativen Position zusätzlich die für jeden Variationsschritt ermittelten Werte (3) in Zusammenhang mit dem durch die Variation sich ergebenden Funkfeld (23) gespeichert werden.

6. Verfahren nach einem der Ansprüche 1 bis 5,
**dadurch gekennzeichnet,**
**dass** zusätzlich eine Messung eines Datendurchsatzes zwischen der das Funkfeld (23) erzeugenden Testvorrichtung (11) und dem zu prüfenden Gerät (20) durchgeführt wird.

7. Testvorrichtung zur Analyse eines über eine Funkstrecke (23) kommunizierenden Geräts (20), welches zur Kommunikation eine aus einer Mehrzahl von Antennen bestehende Antennenanordnung (21) verwendet, wobei die Testvorrichtung
eine Funksignalerzeugungseinrichtung (19) zur Erzeugung eines Funkfelds,
einer Aufnahmevorrichtung (17) zur Anordnung eines zu prüfenden Geräts (20) in dem Funkfeld (23),
einer Analysevorrichtung (19') zum Ermitteln von Werten zumindest einer in einem Rückkanal von dem zu testenden Gerät gesendeten Kanalzustandsinformation aufweist,
wobei die Aufnahmevorrichtung (17) mit einer Positioniervorrichtung (13) verbunden ist, und **dadurch gekennzeichnet,**
**dass** die Analysevorrichtung (19') so eingerichtet ist, dass in jeder relativen Position relativ zu dem Funkfeld ein Wert für die zumindest eine Kanalzustandsinformation ermittelbar ist.

8. Testvorrichtung nach Anspruch 7,
**dadurch gekennzeichnet,**
**dass** die Analysevorrichtung (19') und die Positioniervorrichtung (13) mit einer Steuereinrichtung (24) verbunden sind.

9. Testvorrichtung nach Anspruch 8,
**dadurch gekennzeichnet,**
**dass** die Steuereinrichtung (24) so eingerichtet ist, dass nach dem Einnehmen von geänderten Positionen ein vordefiniertes Testszenario mit Variation des Funkfelds (23) durchführbar ist, wobei für jede neue Funkfeldkonfiguration die Sequenz der Position wieder durchlaufen wird.

10. Testvorrichtung nach einem der Ansprüche 7 bis 9, **dadurch gekennzeichnet,**
**dass** die Testvorrichtung einen Speicher (25) aufweist, der mit der Steuereinrichtung (24) und der Analysevorrichtung (19') verbunden ist.

## Claims

1. A method for analysing a device (20) communicating via a radio link (23), which uses an antenna arrangement (21) comprising a plurality of antennas for the communication, with the following method steps:
- arranging (1) the device under test (20) in a first relative position relative to a radio field (23) ;
- changing the relative position (7) of the device under test (20) relative to the radio field;
**characterised in**
**that** in the first position, a first value of at least one channel-status information retransmitted in a return channel is determined and, in the changed relative position, a second value of the at least one channel-status information is determined (3).

2. The method according to claim 1,
**characterised in**
**that** several position changes (7) are implemented in succession, and a determination of a value (3) for the at least one channel-status information is implemented in every relative position adopted.

3. The method according to claim 2,
**characterised in**
**that** the determination of the values of the channel-status information is repeated after a variation of the radio field for at least some of the relative positions adopted.

4. The method according to any one of claim 1 to 3, **characterised in**
**that** the values (3) determined in every position are buffered in combination with the position (4).

5. The method according to claim 4,
**characterised in,**
**that** in the case of the implementation of a variation of the radio field (10), the values (3) determined for every variation step are additionally buffered at every relative position adopted in combination with the radio field (23) resulting from the variation.

6. The method according to any one of claims 1 to 5, **characterised in**
**that** a measurement of a data throughput between the test instrument (11) generating the radio field (23) and the device under test (20) is additionally implemented.

7. A test instrument for analysing a device (20) communicating via a radio link (23), which uses an antenna arrangement (21) comprising a plurality of antennas for the communication, wherein the test instrument comprising
a radio-signal-generating device (19) for generating a radio field,
a retaining device (17) for arranging a device under test (20) within the radio field (23),
an analysis device (19') for determining values of at least one channel-status information transmitted from the device under test in a return channel,
wherein the retaining device (17) is connected to a positioning device (13),
**characterised in**
**that** the analysis device (19') is set up in such a manner that a value can be determined in every relative position relative to the radio field for the at least one channel-status information.

8. The test instrument according to claim 7, **characterised in**
**that** the analysis device (19') and the positioning device (13) are connected to a control device (24).

9. The test instrument according to claim 8, **characterised in**
**that** the control device (24) is set up in such a manner that, after the adoption of changed positions, a pre-defined test scenario with variation of the radio field (23) can be implemented, wherein the sequence of the position is worked through again for every new radio-field configuration.

10. The test instrument according to any one of claims 7 to 9,
**characterised in**
**that** the test instrument provides a buffer (25), which is connected to the control device (24) and the analysis device (19').

## Revendications

1. Procédé d'analyse d'un appareil (20) qui communique par voie radiofréquence (23) et qui utilise pour la communication un dispositif d'antennes (21) composé d'une pluralité d'antennes, avec les étapes de procédé suivantes :
- disposition (1) de l'appareil (20) à tester dans une première position relative par rapport à un champ radiofréquence (23),
- modification de la position relative (7) de l'appareil (20) à tester par rapport au champ radiofréquence,
**caractérisé en ce que**,
dans la première position, une première valeur d'au moins une information d'état de canal renvoyée dans un canal de retour est déterminée, et **en ce que**, dans la position relative modifiée, une deuxième valeur de l'au moins une information d'état de canal est déterminée (3).

2. Procédé selon la revendication 1,
**caractérisé en ce que**
plusieurs modifications de position (7) sont effectuées successivement, et **en ce que**, dans chaque position relative adoptée, il est effectué une détermination de la valeur (3) pour la au moins une information d'état de canal.

3. Procédé selon la revendication 2,
**caractérisé en ce que**,
pour au moins une partie des positions relatives adoptées, après une variation du champ radiofréquence, la détermination des valeurs de l'information d'état de canal est répétée.

4. Procédé selon l'une des revendications 1 à 3, **caractérisé en ce que**
les valeurs (3) déterminées dans chaque position sont enregistrées en fonction de la position.

5. Procédé selon la revendication 4,
**caractérisé en ce que**,
lors de la réalisation d'une variation du champ radiofréquence (10) pour chaque position relative adoptée, les valeurs (3) déterminées pour chaque étape de variation sont en plus enregistrées en fonction du champ radiofréquence (23) résultant de la variation.

6. Procédé selon l'une des revendications 1 à 5, **caractérisé en ce que**,
en plus, il est effectué une mesure d'un débit de données entre le dispositif de test (11) produisant le champ radiofréquence (23) et l'appareil (20) à tester.

7. Dispositif de test pour l'analyse d'un appareil (20) qui communique par voie radiofréquence (23) et qui utilise pour la communication un dispositif d'antennes (21) composé d'une pluralité d'antennes, le dispositif de test présentant
un équipement de production de signaux radiofréquences (19) pour la production d'un champ radiofréquence,
un dispositif d'accueil (17) pour la disposition d'un appareil (20) à tester dans le champ radiofréquence (23),
un dispositif d'analyse (19') pour la détermination de valeurs d'au moins une information d'état de canal envoyée dans un canal de retour par l'appareil à tester,
le dispositif d'accueil (17) étant raccordé à un dispositif de positionnement (13), et
**caractérisé en ce que**
le dispositif d'analyse (19') est aménagé de sorte que, dans chaque position relative par rapport au champ radiofréquence, une valeur de l'au moins une information d'état de canal peut être déterminée.

8. Dispositif de test selon la revendication 7, **caractérisé en ce que**
le dispositif d'analyse (19') et le dispositif de positionnement (13) sont raccordés à un équipement de commande (24).

9. Dispositif de test selon la revendication 8, **caractérisé en ce que**
l'équipement de commande (24) est aménagé de sorte que, après l'adoption de positions modifiées, un scénario de test prédéfini avec variation du champ radiofréquence (23) peut être effectué, la séquence de la position étant parcourue de nouveau pour chaque nouvelle configuration de champ radiofréquence.

10. Dispositif de test selon l'une des revendications 7 à 9,
**caractérisé en ce que**
le dispositif de test présente une mémoire (25) qui est raccordée à l'équipement de commande (24) et au dispositif d'analyse (19').
